(19) Europäisches Patentamt
European Patent Office
Office européen des brevets

(11) Veröffentlichungsnummer : **0 081 140**
**B1**

(12) # EUROPÄISCHE PATENTSCHRIFT

(45) Veröffentlichungstag der Patentschrift : **12.02.86**

(51) Int. Cl.$^4$ : **C 08 G 65/46**

(21) Anmeldenummer : **82110857.8**

(22) Anmeldetag : **24.11.82**

(54) **Verfahren zur Entfernung des Katalysators aus Polyphenylenethern.**

(30) Priorität : **05.12.81 DE 3148149**

(43) Veröffentlichungstag der Anmeldung : **15.06.83 Patentblatt 83/24**

(45) Bekanntmachung des Hinweises auf die Patenterteilung : **12.02.86 Patentblatt 86/07**

(84) Benannte Vertragsstaaten : **BE DE FR GB NL**

(56) Entgegenhaltungen :
**EP-A- 0 059 368**
**DE-A- 2 105 372**
**DE-A- 2 364 319**
**DE-A- 2 460 325**
**DE-A- 2 532 477**
**GB-A- 1 527 409**
**US-A- 4 026 870**
**US-A- 4 237 265**

(73) Patentinhaber : **BASF Aktiengesellschaft**
**Carl-Bosch-Strasse 38**
**D-6700 Ludwigshafen (DE)**

(72) Erfinder : **Schuster, Hans H., Dr.**
**Luitpoldstrasse 166**
**D-6700 Ludwigshafen (DE)**
Erfinder : **Hambrecht, Juergen, Dr.**
**Werderstrasse 30**
**D-6900 Heidelberg (DE)**
Erfinder : **Naarmann, Herbert, Dr.**
**Haardtblick 15**
**D-6719 Wattenheim (DE)**
Erfinder : **Muench, Volker, Dr.**
**Luitpoldstrasse 114**
**D-6700 Ludwigshafen (DE)**

**EP 0 081 140 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Metallsalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators durch Zugabe wäßriger Lösungen chelatkomplexbildender Mittel.

Polyphenylenether und Verfahren zu ihrer Herstellung sind allgemein bekannt und vielfach beschrieben, wie beispielsweise in den US-Patentschriften 3 306 874, 3 306 875, 3 639 656, 3 642 699 und 3 661 848.

Die zur Herstellung der Polyphenylenether am häufigsten angewendeten Verfahren umfassen die Selbskondensation einwertiger Phenole durch Einwirkung von Sauerstoff in Gegenwart von Katalysatoren.

Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren wie es z. B. in der DE-OS 2 105 372 im Gegenstromextraktionsverfahren vorgenommen wird. Verwendet werden auch Polycarbonsäuren und/oder Polyamincarbonsäuren (s. DE-OS 2 364 319) oder andere Chelatisierungsmittel wie Nitrilotriessigsäure und ihre Natriumsalze oder Ethylendiamintetraessigsäure und ihre Natriumsalze (= $Na_3$-EDTA) (s. DE-OS 2 532 477) letztere auch in Kombination mit quarternären Ammoniumsalzen (US-PS 4 026 870). Beschrieben ist auch die Katalysatorabtrennung mit Hilfe komplexbildender Mittel aus der Gruppe des Bisguanids (DE-OS 2 460 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Alle bisherigen Maßnahmen zur Entfernung von Katalysatorresten haben aber den Nachteil, daß zu einer vollständigen Entfernung (Restmenge des Metallions kleiner als 10 ppm) mehrfache Extraktionsschritte bei z. T. komplizierten Trennverfahren angewendet werden müssen. Häufig wird dabei der Charakter des Polyphenylenethers verändert.

Der Erfindung lag deshalb die Aufgabe zugrunde, ein einfaches und hochwirksames Verfahren zur Abtrennung der Katalysatorreste aus den bei der Selbstkondensation einwertiger Phenole entstehenden Reaktionsprodukten zu entwickeln.

Diese Aufgabe wird erfindungsgemäß dadurch gelöst, daß die Abtrennung der Metallionkomponente des Katalysators durch Zugabe von 0,5 bis 10 Mol pro Mol Metallion einer Organophosphonsäure und/oder Organophosphinsäure bzw. deren Salze erfolgt.

Bevorzugt ist die Organophosphonsäure eine Polyalkylenpolyphosphonsäure, Hydroxyalkylenpolyphosphonsäure, Aminopoly(alkylenphosphonsäure), Alkylenpolyaminpoly(alkylenphosphonsäure), Alkylendiamindiessigsäurepolyalkylenphosphonsäure), Alkylendiaminpoly(arylalkylenphosphonsäure) oder ein Gemisch obiger Phosphonsäuren.

Besonders bevorzugt werden eingesetzt die Alkali-, Erdalkali-, Ammonium- oder Amin-Salze der Organophosphonsäuren sowie deren Mischungen, eine Mischung der Organophosphonsäuren und deren Salze sowie die Verbindungen :

1-Hydroxyethan-1,1-diphosphonsäure
1-Aminoethan-1,1-diphosphonsäure
N,N-Dimethylureidomethandisphonsäure
Aminotris(methylenphosphonsäure)
Ethylendiamintetra(methylenphosphonsäure)
Hexamethylendiamintetra(methylenphosphonsäure)
Diethylentriaminpenta(methylenphosphonsäure)

und/oder deren Natrium-, Kalium-, Ammonium- und Di-n-butylamin-Salze.

Bevorzugt ist die Organophosphinsäure eine Alkylenphosphinsäure, Hydroxyalkylenpolyphosphinsäure, Aminopoly(alkylenphosphinsäure), Alkylenpolyaminophosphinsäure, Alkylendiaminopoly(acrylalkylenphosphinsäure), oder eine Mischung dieser Phosphinsäuren.

Besonders bevorzugt werden eingesetzt die Alkali-, Erdalkali-, Ammonium- und/oder Amin-Salze der Organophosphinsäuren oder deren Mischungen, eine Mischung der Organophosphinsäure und deren Salze, sowie die Verbindungen : Ethylendiamin-N,N'-di(phenylmethylenphosphinsäure), Ethylendiamin-N,N'-di(o-hydroxyphenylmethylenphosphinsäure) und/oder deren Natrium-, Kalium-, Ammonium- und Di-n-butylamin-Salze.

Bevorzugt ist das chelatbildende Agens in solch einer Menge vorhanden, daß auf ein Mol Metallion im Katalysator 0,5 bis 3,5 Mol chelatbildendes Agens kommen.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen Durchschnittsmolekulargewichte aus dem Zahlenmittel ($\bar{M}_n$) von 23 000 bis 40 000, bevorzugt 25 000 bis 30 000, bestimmt nach der in « Macromolecular Synthesis » *1* (1978), Seite 83 angegebenen Methode, auf. Hochmolekulare Polyphenylenether, auch Poly(phenylenoxid) genannt, sind an sich aus der Literatur seit längerem bekannt (vgl. z. B. US-PS 3 661 848 ; US-PS 3 219 625 oder US-PS 3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 25 bis 50 °C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach bekannten Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter bereich bei der Menge der eingesetzten Amine liegt bei 2,0 bis 25 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert von 0,2 bis 2,5 Mol pro 100 Mol des Monomeren.

Der Anteil des Lösungsmittels liegt üblicherweise im Bereich von 1 : 1 bis 20 : 1, d. h. maximal bis zu einem Überschuß des 20-fachen am Lösungsmittel, bezogen auf das Monomere.

Als Lösungsmittel werden Benzol, Toluol und aliphatische Kohlenwasserstoffe, insbesondere $C_6$- bis $C_{10}$-Kohlenwasserstoffe, verwendet.

Darüber hinaus kann die reaktionsmischung einen Aktivator wie ein Diarylguanidin oder ein Diarylformamidin enthalten (vgl. US-PS 3 544 515).

Die Polykondensationsreaktion wird bei Temperaturen zwischen 15 und 22, insbesondere 18 und 22 °C durchgeführt. Hierzu wird der Sauerstoff in die 15 bis 22 °C warme Lösung des Monomeren in Gegenwart des Aminkomplexes eingeleitet. Die Reaktion ist in kurzer Zeit beendet, d. h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien.

Erfindungsgemäß werden diese Reaktionslösungen mit den komplexbildenden Organophosphon-und/oder -phosphinsäuren bzw. deren Salze zur Abtrennung des im Polymeren enthaltenden Metallkatalysators behandelt. Die Art und Weise der Zugabe dieser Organophosphorverbindungen ist dabei unkritisch. So können die Organophosphorverbindungen in wäßriger Lösung in Form ihrer Alkali-, Erdalkali-, Ammonium- und/oder Amin-Salze hinzugegeben werden. Die Zugabe kann auf einmal oder in mehreren Anteilen kontinuierlich oder diskontinuierlich mit zusätzlichem Wasser erfolgen. Die Abtrennung der Metallkomponente kann dabei in geeigneten Verfahrensvorrichtungen wie z. B. in Filterpressen, in Dekantationstanks, Flüssig/Flüssig/Fest-Zentrifugen und ähnlichen vorgenommen werden.

Die Kontaktzeit des komplexbildenden Agens mit der katalysatorhaltigen Polyphenylenether-Phase kann innerhalb weiter Grenzen variieren. Bevorzugt werden Zeiten von 1 Minute bis 5 Stunden. Häufig genügen 5 bis 60 Minuten. Die bevorzugte Temperatur liegt zwischen 25 und 90 °C, es sind jedoch auch Temperaturbereiche darunter und darüber anwendbar.

Bevorzugte Komplexierungsmittel auf Basis der erfindungsgemäßen Organophosphonsäuren sind : 1-Hydroxyethan-1,1-diphosphonsäure (HEDP), Aminotris(methylenphosphonsäure) (ATMP), Ethylendiamintetra(methylenphosphonsäure) (EDATMP), Hexamethylendiamintetra(methylenphosphonsäure), Diethylentriaminpenta(methylenphosphonsäure), Ethylendiamin-N,N'-diessigsäure-N,N'-di(methylenphosphonsäure) (DETAPMP), Ethylendiamin-N,N'-di(phenylmethylenphosphonsäure), Ethylendiamin-N,N'-bis(dimethylmethylenphosphonsäure), 1-Aminoethan-1,1-diphosphonsäure, N,N'-Dimethylaminomethandiphosphonsäure, N,N'-Dimethylureidomethandiphosphonsäure, 1-Hydroxy-3-aminopropan-1,1-diphosphonsäure.

Beispiele für chelatbildende Organophosphinsäuren sind : Alkylenpolyphosphinsäuren, Hydroxyalkylenpolyphosphinsäuren, Aminopoly(alkylenphosphinsäuren), Alkylenpolyaminophosphinsäuren,

Alkylendiaminpoly(arylalkylenphosphinsäuren), Ethylendiamin-N,N-di(phenylmethylenphosphinsäure) oder Ethylendiamin-N,N'-di(o-hydroxyphenylmethylenphosphinsäure).

Die beschriebenen chelatbildenden Organophosphon- und/oder -phosphinsäuren können nach den in den deutschen Patentschriften 2 658 961, 2 722 539, 2 738 763, 2 838 437 und in Kabachnik et al., « Organophosphorus Complexones », Russ. Chem. Rev. *43* (1974) 733 bis 744 bzw. Russ. Chem. Rev. *37* (1968) 503 bis 518 beschriebenen Verfahren hergestellt werden.

Zur Anwendung als chelatbildendes Agens kommen nicht nur die freien Organophosphon- und/oder Organophosphinsäuren. Ebenso wirksam sind ihre Alkali-, Erdalkali-, Ammonium- und Aminsalze. Insbesondere die Natrium-, Kalium- und Ammoniumsalze, sowie Salze mit Di-n-butylamin haben sich zur Katalysatorabtrennung bewährt. Die Salze können für sich selbst oder ein Gemisch miteinander oder in Gemischen mit den freien Organophosphon- und/oder Organophosphinsäuren eingesetzt werden.

Es werden pro Mol zu entfernendes Schwermetallion 0,5 bis 10 Mol, besonders bevorzugt 1 bis 5 Mol der oben beschriebenen Organophosphorsäureverbindungen verwendet.

In manchen Fällen kann zur rascheren Abtrennung des dabei resultierenden Metallkomplexes ein sogenannter Phasentransferkatalysator hinzugegeben werden. Solche Phasentransferkatalysatoren sind quaternäre Ammoniumverbindungen wie z. B. Tetrabutylammoniumbromid, Tri-i-nonylmethylammoniummethosulfat, Tricaprylmethylammoniumchlorid etc. Es können aber auch Phosphoniumsalze der allgemeinen Formel :

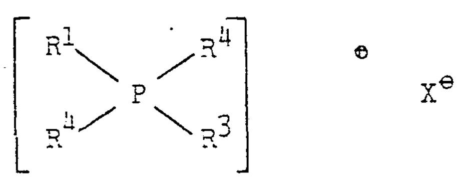

wobei $R^1$, $R^2$, $R^3$ und $R^4$ Alkyl-, Alkylen-, Aryl- und/oder Aralkylgruppen und X ein anorganisches Anion sein können, eingesetzt werden.

Insbesondere Tetrabutylphosphoniumchlorid, Tributylhexadecyclophosphoniumbromid, Ethyltriphenylphosphoniumbromid, Triphenyl-n-propylphosphoniumiodid, Benzyltriphenylphosphoniumiodid und Tetraphenylphosphoniumchlorid sind geeignet.

Des weiteren können alle anderen, als Phasentransferkatalysatoren wirksamen Verbindungen, wie z. B. Kronenether, eingesetzt werden.

Die Phasentransferkatalysatoren werden in Mengen von 10 bis 5 000 ppm, bezogen auf die Polyphenyletherlösung, vorzugsweise in Mengen von 25 bis 3 000 ppm, eingesetzt.

Die Abtrennung der Metallkatalysatoren bis zur vollständigen Entfernung aus dem Polyphenylenether-Polymeren kann durch mehrfachaufeinanderfolgende Zugabe der erfindungsgemäßen komplexbildenden Organophosphorverbindungen und anschließende Abtrennung der resultierenden Metallkomplexe gemäß der bereits beschriebenen Verfahren erfolgen. Bevorzugt wird jedoch eine Ausführungsform der Erfindung, wonach die gesamte Katalysatormenge in einem Komplexier- und Separierschritt aus dem Polymeren entfernt wird.

In einzelnen Fällen kann es zur weiteren Reduzierung des Restmetallgehaltes in der Polyphenylenetherlösung vorteilhaft sein, nach der Komplexierung, mit oder ohne vorheriger mechanischer Abtrennung der metallkomplexhaltigen wäßrigen Phase, das in der Mischung verbliebene Wasser im Vakuum, bei Normal- oder Überdruck destillativ zu entfernen. Sich dabei aus der Polymerenlösung ausscheidende Anteile, insbesondere Verbindungen des Metallions des Katalysators können dann durch bekannte Methoden der Flüssig-/fest-Trennung z. B. Filtrieren, Zentrifugieren etc. aus der Polymerlösung abgeschieden werden.

Nach der Entfernung der metallischen Komponente als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuß von einem Alkohol, d. h. Methanol, isoliert werden. Das filtrierte Produkt kann im Alkohol aufgeschlämmt und — falls gewünscht — mit einem Entfärbungsmittel gerührt werden. Der Polyphenylenether wird dann abfiltriert und nach herkömmlichen Verfahren in Filme, Fasern, ausgeformte Gegenstände und dgl. umgewandelt. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z. B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste und dgl. wirtschaftlicher sind als die bekannten Ausfällungsverfahren.

Die mit der Erfindung erzielten Vorteile bestehen insbesondere darin, daß mit Hilfe der komplexbildenden Organophosphon- und/oder -phosphinsäuren bzw. deren Salze die Metallkatalysator-Reste in den Polyphenylenethern erheblich reduziert werden können. Die resultierenden Polyphenylenether zeichnen sich durch eine verbesserte Farb- und Oxidationsstabilität bei der Verarbeitung im Temperaturbereich über 250 °C aus. Die Abtrennung der Metallkatalysatoren nach dem erfindungsgemäßen Verfahren ist einfach und erfolgt zumeist in einem Schritt. Dabei können niedrig- und relativ hochkonzentrierte Polyphenylenoxid-Reaktionslösungen (bis zu 25 Gew.%) ohne Probleme umgesetzt werden.

Die folgenden Beispiele dienen dazu, die Erfindung zu illustrieren. Die angegebenen Teile sind Gewichtsteile, es sei denn, es ist anders angegeben.

Die Intrinsikviskosität wird durch Messung an 0,5 gew.%igen Lösungen in Chloroform bei 30 °C bestimmt.

## Beispiele

Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wird bei 20 °C 5 Minuten unter Einleiten von Sauerstoff gerührt, und dann wird im Verlauf von 30 Minuten in eine Lösung von 204 g DMP in 1 400 ml Toluol eindosiert. Anschließend wird noch 1 Stunde bei 20 °C gerührt. Die Reaktion wird in Gegenwart von 30 Liter Sauerstoff pro Stunde durchgeführt.

Abtrennung des Metallions aus der polyphenylenetherhaltigen Reaktionsmischung.

Einer bei Reaktionsende 0,53 g Cu/kg enthaltenden polyphenylenetherhaltigen, toluolischen Reaktionslösung wurden unter kräftigem Rühren nacheinander die der 1,1-fachen molaren Menge des in der Reaktionsmischung enthaltenen Kupfers entsprechende Menge der komplexbildenden Organophosphorverbindungen und Wasser zugegeben, so daß dessen Anteil in allen Proben gleichmäßig 50 g/kg Reaktionslösung betrug, unabhängig davon, ob die komplexbildende Verbindung in Substanz oder als wäßrige Lösung zugesetzt wurde.

Die Mischung von Reaktionslösung und komplexbildender Organophosphorsäureverbindung wurde unter kräftigem Rühren 45 min bei 75 °C gehalten. Danach erfolgte Trennung von wäßriger und öliger Phase im Scheidetrichter. Die Tabelle zeigt vergleichsweise die in der öligen Phase jeweils gemessene Cu-Konzentration.

Tabelle

| Nr. | Chelatbildner - Zusatz | [Cu] mg/kg |
|---|---|---|
| 0 | ohne Zusatz | 412 |
| 1 | HEDP | 28 |
| 2 | ATMP | 5 |
| 3 | EDATMP | 18 |
| 3a | $K_6$-EDATMP | 12 |
| 4 | DETAPMP | 3 |
| zum Vergleich | | |
| 5 | $Na_3$-EDTA (nicht erfindungsgemäß) | 33 |

**Patentansprüche**

1. Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Metallsalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators, durch Zugabe wäßriger Lösungen chelatkomplexbildender Mittel, dadurch gekennzeichnet, daß die Abtrennung der Metallionkomponente des Katalysators durch Zugabe von 0,5 bis 10 Mol pro Mol Metallion einer Organophosphonsäure und/oder Organophosphinsäure bzw. deren Salze erfolgt.

2. Verfahren nach Anspruch 1, dadurch gekennzeichnet, daß die Organophosphonsäure eine

Polyalkylenpolyphosphonsäure, Hydroxyalkylenpolyphosphonsäure, Aminopoly(alkylenphosphonsäure), Alkylenpolyaminpoly(alkylenphosphonsäure), Alkylendiamindiessigsäurepoly(alkylenphosphonsäure), Alkylendiaminpoly(arylalkylenphosphonsäure) oder ein Gemisch obiger Phosphonsäuren ist.

3. Verfahren nach Ansprüchen 1 und 2, dadurch gekennzeichnet, daß die Alkali-, Erdalkali-, Ammonium- oder Aminsalze der Organophosphonsäuren sowie deren Mischungen eingesetzt werden.

4. Verfahren nach Ansprüchen 1, 2 und 3, dadurch gekennzeichnet, daß eine Mischung der Organophosphonsäuren und deren Salze eingesetzt wird.

5. Verfahren nach Ansprüchen 1, 2, 3 und 4, dadurch gekennzeichnet, daß 1-Hydroxyethan-1,1-diphosphonsäure, 1-Aminoethan-1,1-diphosphonsäure, N,N-Dimethylureidomethandisphosphonsäure, Aminotris(methylenphosphonsäure), Ethylendiamintetra(methylenphosphonsäure), Hexamethylendiamintetra(methylenphosphonsäure), Diethylentriaminpenta(methylenphosphonsäure) und/oder deren Natrium-, Kalium-, Ammonium- und Di-n-butylaminsalze eingesetzt werden.

6. Verfahren nach Anspruch 1, dadurch gekennzeichnet, daß die Organophosphinsäure eine Alkylenphosphinsäure, Hydroxyalkylenpolyphosphinsäure, Aminopoly(alkylenphosphinsäure), Alkylenpolyaminophosphinsäure, Alkylendiaminpoly(arylalkylenphosphinsäure) oder eine Mischung dieser Phosphinsäuren ist.

7. Verfahren nach Ansprüchen 1 und 6, dadurch gekennzeichnet, daß die Alkali-, Erdalkali-, Ammonium- und/oder Amin-Salze der Organophosphinsäuren oder deren Mischungen eingesetzt werden.

8. Verfahren nach Ansprüchen 1, 6 und 7, dadurch gekennzeichnet, daß eine Mischung der Organophosphinsäure und deren Salze eingesetzt werden.

9. Verfahren nach Ansprüchen 1 und 6 bis 8, dadurch gekennzeichnet, daß als Organophosphinsäure Ethylendiamin-N,N'-di(phenylmethylenphosphinsäure), Ethylendiamin-N,N-di(o-hydroxyphenylmethylenphosphinsäure) und/oder deren Natrium-, Kalium-, Ammonium- und Di-n-butylamin)Salze eingesetzt werden.

10. Verfahren nach Anspruch 1, dadurch gekennzeichnet, daß das chelatbildende Agens in solch einer Menge vorliegt, daß auf ein Mol Metallion im Katalysator 0,5 bis 3,5 Mol chelatbildendes Agens kommen.

**Claims**

1. A process for removing the catalyst in the production of high molecular weight polyphenylene ethers from monohydric phenols which have alkyl substituents in the two ortho-positions and possibly in the meta-position, but not in the para-position, by oxidative coupling reaction with oxygen at from 15 to 50 °C in the presence of a catalyst complex of a metal salt and an organic amine in the presence of 1 to 20 parts by weight of solvent per part by weight of monomeric phenol, and in the presence or absence of an activator, by the addition of an aqueous solution of a chelate-complex-forming agent, wherein the metal ion component of the catalyst is separated off by the addition of from 0.5 to 10 moles of an organophosphonic acid and/or an organophosphinic acid or a salt thereof per mole of metal ion.

2. A process as claimed in claim 1, wherein the organophosphonic acid is a polyalkylenepolyphosphonic acid, hydroxyalkylenepolyphosphonic acid, aminopoly(alkylenephosphonic acid), alkylenepolyaminopoly(alkylenephosphonic acid), alkylenediaminediacetic acid-poly(alkylenephosphonic acid), alkylenediaminepoly(arylakylenephosphonic acid) or a mixture of these phosphonic acids.

3. A process as claimed in claims 1 and 2, wherein the alkali metal, alkaline earth metal, ammonium or amine salts of the organophosphonic acids or mixtures thereof are employed.

4. A process as claimed in claims 1, 2 and 3, wherein a mixture of the organophosphonic acids and their salts is employed.

5. A process as claimed in claims 1, 2, 3 and 4, wherein 1-hydroxyethane-1,1-diphosphonic acid, 1-aminoethane-1,1-diphosphonic acid, N,N-dimethylureidomethanediphosphonic acid, aminotris(methylenephosphonic acid), ethylenediaminetetra(methylenephosphonic acid), hexamethylenediaminetetra(methylenephosphonic acid), diethylenetriaminepenta(methylenephosphonic acid) and/or their sodium, potassium, ammonium and di-n-butylamine salts are employed.

6. A process as claimed in claim 1, wherein the organophosphinic acid is an alkylenephosphinic acid, hydroxyalkylenepolyphosphinic acid, aminopoly(alkylenephosphinic acid), alkylenepolyaminophosphinic acid, alkylenediaminepoly(arylalkylenphosphinic acid) or a mixture of these phosphinic acids.

7. A process as claimed in claims 1 and 6, wherein the alkali metal, alkaline earth metal, ammonium and/or amine salts of the organophosphinic acids or mixtures thereof are employed.

8. A process as claimed in claims 1, 6 and 7, wherein a mixture of the organophosphinic acids and their salts is employed.

9. A process as claimed in claims 1 and 6 to 8, wherein ethylenediamine-N,N'-di(phenylmethylenephosphinic acid), ethylenediamine-N,N-di(o-hydroxyphenylmethylenephosphinic acid) and/or a sodium, potassium, ammonium or di-n-butylamine salt thereof is used as the organophosphinic acid.

10. A process as claimed in claim 1, wherein the chelate-forming agent is used in such an amount that 0.5 to 3.5 moles thereof is present per mole of metal ion in the catalyst.

**Revendications**

1. Procédé pour l'élimination du catalyseur employé lors de la préparation de poly(éthers de phénylène) d'un poids moléculaire élevé à partir de phénols mono-valents, substitués sur les deux positions ortho et éventuellement en position méta, mais non en position para, par des radicaux alkyle, par une réaction de couplage oxydante avec l'oxygène, à des températures de 15 à 50 °C, en présence d'un complexe catalytique d'un sel de métal et d'une amine organique, d'un solvant en une proportion pondérale par rapport au phénol monomère entre 1 : 1 et 20 : 1 et éventuellement d'un agent d'activation, par l'addition de solutions aqueuses de produits formant des complexes chélatés, caractérisé en ce que la séparation de la composante ions de métal du catalyseur est réalisée par l'addition de 0,5 à 10 moles d'un acide organo-phosphonique et(ou) d'un acide organo-phosphinique ou d'un sel de ces acides par mole d'ions de métal.

2. Procédé suivant la revendication 1, caractérisé en ce que l'acide organo-phosphonique est choisi parmi un acide polyalkylène-polyphosphonique, un acide hydroxyalkylène-polyphosphonique, un acide amino-poly(alkylène-phosphonique), un acide alkylène-polyamino-poly(alkylène-phosphonique), un acide alkylène-diamino-diacétato-poly(alkylène-phosphonique) et un acide alkylène-diamino-poly(aryl-alkylène-phosphonique) et des mélanges de ces acides phosphoniques.

3. Procédé suivant les revendications 1 et 2, caractérisé en ce que l'on emploie des sels de métaux alcalins ou alcalino-terreux ou d'ammonium ou d'amines desdits acides organo-phosphoniques, éventuellement en mélange.

4. Procédé suivant la revendication 1, 2 et 3, caractérisé en ce que l'on emploie un mélange d'acides organo-phosphoniques et de sels de ceux-ci.

5. Procédé suivant les revendications 1, 2, 3 et 4, caractérisé en ce que l'on emploie l'acide 1-hydroxy-éthane-1,1-diphosphonique, l'acide 1-amino-éthane-1,1-diphosphonique, l'acide N,N-diméthyl-uréido-méthane-diphosphonique, l'acide amino-tris-(méthylène-phosphonique), l'acide éthylène-diamino-tétra)-méthylène-phosphonique), l'acide hexaméthylène-diamino-tétra-(méthylène-phosphonique), l'acide diéthylène-triamino-penta-(méthylène-phosphonique) et(ou) les sels de sodium, de potassium, d'ammonium ou de di-n-butyl-amine de ces acides.

6. Procédé suivant la revendication 1, caractérisé en ce que l'acide organo-phosphinique est choisi parmi un acide alkylène-phosphinique, un acide hydroxy-alkylène-polyphosphinique, un acide amino-poly(alkylène-phosphinique), un acide alkylène-poly(amino-phosphinique), un acide alkylène-diamino-poly(aryl-alkylène-phosphinique) et les mélanges de ces acides phosphiniques.

7. Procédé suivant les revendications 1 et 6, caractérisé en ce que l'on emploie des sels de métaux alcalins ou alcalino-terreux ou d'ammonium ou d'amines des dits acides organo-phosphiniques, éventuellement en mélange.

8. Procédé suivant les revendications 1, 6 et 7, caractérisé en ce que l'on emploie un mélange d'un acide organo-phosphinique et de ses sels.

9. Procédé suivant les revendications 1 et 6 à 8, caractérisé en ce que l'acide organo-phosphinique est choisi parmi l'acide éthylène-diamino-N,N'-di-(phényl-méthylène-phosphinique) et l'acide éthylène-diamino-N,N-di-(ortho-hydroxy-phényl-méthylène-phosphinique) et(ou) les sels de sodium, de potassium, d'ammonium ou de di-n-butyl-amine de ceux-ci.

10. Procédé suivant la revendication 1, caractérisé en ce que l'agent chélatant est ajouté en une proportion telle que pour 1 mole d'ions de métal dans le catalyseur il y ait entre 0,5 et 3,5 moles d'agent chélatant.